Europäisches Patentamt

European Patent Office

Office européen des brevets

(11) Numéro de publication: **0 297 976**
**B1**

(12) ## FASCICULE DE BREVET EUROPEEN

(45) Date de publication du fascicule du brevet:
29.08.90

(51) Int. Cl.⁵: **F16K 41/10**, F16J 15/52, F16H 21/14

(21) Numéro de dépôt: **88401655.1**

(22) Date de dépôt: **28.06.88**

(54) Dispositif de transmission étanche à soufflet métallique notamment pour vannes à simple rotation quart de tour.

(30) Priorité: **02.07.87 FR 8709402**

(43) Date de publication de la demande:
**04.01.89 Bulletin 89/1**

(45) Mention de la délivrance du brevet:
**29.08.90 Bulletin 90/35**

(84) Etats contractants désignés:
**BE CH DE GB IT LI LU NL**

(56) Documents cités:
**EP-A- 0 180 903**
**FR-A- 78 358**
**FR-A- 1 248 634**
**FR-A- 1 280 128**
**FR-E- 78 156**
**GB-A- 826 513**
**GB-A- 2 155 580**
**US-A- 2 522 735**

(73) Titulaire: **NORMETEX, 13, rue de la Brasserie,**
**F-27500 Pont Audemer(FR)**

(72) Inventeur: **Pottier, Daniel, 10, Rue de la Roquette,**
**F-27500 Pont-Audemer(FR)**
Inventeur: **Leclaire, Rémy, Plaine de l'Abbaye Corneville**
**Sur Risle, F-27500 Pont-Audemer(FR)**
Inventeur: **Vulliez, Paul, 48 Route de Rouen,**
**F-27500 Pont-Audemer(FR)**

(74) Mandataire: **CABINET BONNET-THIRION, 95 Boulevard**
**Beaumarchais, F-75003 Paris(FR)**

ACTORUM AG

## Description

L'invention se rapporte à un dispositif de transmission étanche, à soufflet, plus particulièrement adapté à la commande d'une vanne de haute sécurité, dont la manoeuvre s'effectue par une rotation d'un quart de tour, ou moins. L'invention vise une simplification de structure de ce type de dispositif et une amélioration des conditions de travail du soufflet, propre à en augmenter la fiabilité et la durée de vie.

On connaît un dispositif de commande étanche à soufflet métallique, destiné à être associé à un mécanisme de vanne, le soufflet assurant l'isolement entre ce mécanisme et le milieu extérieur. Un tel dispositif a notamment été développé pour les besoins de l'industrie nucléaire, pour assurer la commande d'une vanne pouvant être en contact avec un fluide toxique et radio-actif. Ce dispositif comporte un arbre de commande et un arbre récepteur isolés l'un de l'autre. Le soufflet est monté pour entourer complètement l'arbre récepteur et il est soudé, de façon étanche, par ses extrémités axiales, d'une part à une partie fixe du boîtier du dispositif et d'autre part à une pièce de transfert mobile, couplée à la fois à l'arbre récepteur et à l'arbre de commande. Pour que le soufflet puisse remplir durablement sa fonction, il est impératif qu'il ne soit soumis à aucun effort de torsion. C'est pourquoi, la pièce de transfert, généralement plate, est assujettie à se déplacer de façon à décrire un mouvement dit de "translation circulaire". Ce mouvement peut être obtenu positivement par une cinématique appropriée ou bien d'une façon "résultante" grâce à différents moyens mécaniques d'interdiction. Le premier cas est préférable mais nécessite généralement des mécanismes compliqués et coûteux. Des dispositifs de ce genre sont par exemple décrits dans le brevet britannique N° 826 513 et dans le certificat d'addition N° 78 358 au brevet français N° 1 248 634. Dans ce certificat d'addition, on décrit un mode de réalisation plus particulièrement adapté à la commande d'une vanne à simple rotation quart de tour.

La complexité des systèmes connus en a limité jusqu'à présent l'application à des domaines particuliers, notamment l'industrie nucléaire. L'invention vise, en premier lieu, à simplifier ce type de dispositif de commande à soufflet métallique pour diversifier son application à d'autres domaines de l'industrie chimique. L'invention vise particulièrement l'actionnement d'une vanne quart de tour au moyen d'un dispositif de transmission étanche à soufflet dans lequel le mouvement de "translation circulaire" précitée est engendrée positivement par une cinématique appropriée de conception simple.

L'idée de base de l'invention, d'où résulte la simplification de structure, consiste à décaler physiquement l'arbre de commande et l'arbre récepteur, en plaçant les axes de ces deux arbres aux deux extrémités d'un côté d'un système d'articulation à parallélogramme déformable incluant ladite pièce de transfert.

Dans cet esprit, l'invention concerne un dispositif de transmission d'un mouvement de rotation, étanche, à soufflet, comprenant un arbre de commande et un arbre récepteur, du type dans lequel ledit soufflet entoure ledit arbre récepteur et est fixé de façon étanche par ses deux extrémités, d'un part à une partie fixe d'un boîtier et d'autre part à une pièce de transfert assujettie à se déplacer parallèlement à un plan perpendiculaire audit arbre récepteur, caractérisé en ce que ledit arbre de commande et ledit arbre récepteur sont parallèles, espacés l'un de l'autre d'une distance $\underline{d}$ et situés de part et d'autre de la pièce de transfert, en ce que chaque arbre comporte une manivelle excentrée d'une même distance prédéterminée de son axe et en ce que ces deux manivelles sont couplées à ladite pièce de transfert en étant espacées de la même distance que lesdits arbres, de façon à permettre une translation circulaire engendrée de ladite pièce de transfert.

Un autre but de l'invention est d'optimiser la trajectoire de l'extrémité du soufflet lié à la pièce de transfert, pour réduire le déport subi par ce soufflet au cours de la course d'actionnement et par conséquent pour réduire la fatigue de cet organe fragile. Dans ce but, l'invention concerne aussi un dispositif conforme à la définition qui précède, caractérisé en ce que le centre du périmètre de raccordement du soufflet à ladite pièce de transfert est décalé de l'axe dudit arbre récepteur dans un sens propre à réduire ledit déport.

Ces dispositions qui permettent un moindre travail du soufflet et améliorent sa tenue sous pression conduisent à une construction très robuste des pièces soumises au couple à transmettre qui peut être très important dans certaines applications industrielles de ce type de vanne quart de tour.

L'invention sera mieux comprise, et d'autres avantages de celle-ci apparaîtront plus clairement à la lumière de la description qui va suivre d'un dispositif de transmission étanche conforme à son principe, donnée uniquement à titre d'exemple et faite en référence aux dessins annexés dans lesquels:

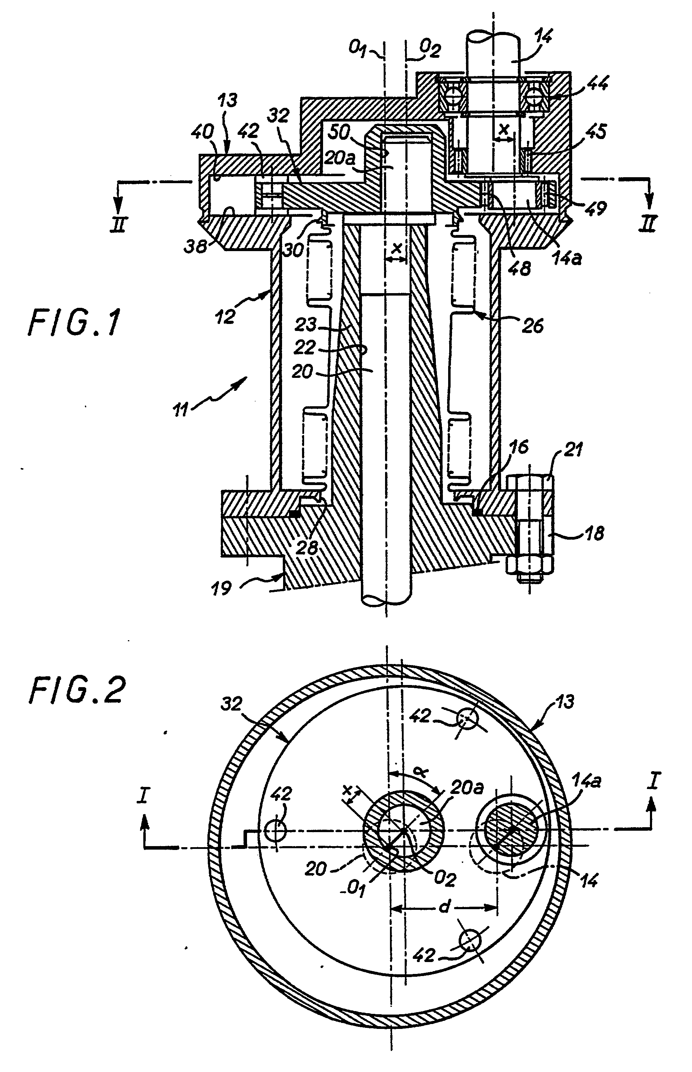

- la figure 1 est une vue en élévation d'un dispositif de commande à soufflet conforme à l'invention, représentée selon la coupe I-I de la figure 2;
- la figure 2 est une coupe II-II de la figure 1;
- la figure 3 est une vue schématique simplifiée du dispositif de la figure 1, représentée en coupe dans le plan bissecteur de la trajectoire de la manivelle de l'arbre récepteur et explicitant une caractéristique de l'invention; et
- la figure 4 est une autre vue schématique simplifiée représentée selon la flèche IV de la figure 3.

En se reportant aux dessins, le dispositif de transmission étanche comporte un boîtier 11 constitué d'un corps 12 globalement cylindrique tubulaire, muni de brides annulaires à ses extrémités axiales et surmonté d'un élément formant couvercle 13 dans lequel un arbre de commande 14 est monté en rotation. Le corps 12 est assemblé par l'une de ses brides à une autre bride 18 d'un élément de structure 19 renfermant un mécanisme actionné par un arbre récepteur 20 du dispositif de transmission. L'assemblage du corps 12 sur la bride 18 se fait par des boulons 21 avec interposition d'un joint d'étanchéité annulaire 16. Le mécanisme actionné par l'arbre 20 n'est pas représenté; il peut s'agir par exemple d'un mécanisme de vanne. L'arbre récepteur 20 est guidé dans l'alésage 22 d'un canon 23 solidaire de l'élément de structure 19; dans l'exemple décrit, ce canon est venu de forgeage avec ledit élément de structure. Un soufflet métallique 26 entoure le canon 23 et par conséquent, l'arbre récepteur 20. Le soufflet est fixé de façon étanche, ici soudé, par l'une de ses extrémités à une partie fixe du boîtier constitué, selon l'exemple, par une couronne 28 faisant saillie intérieurement de la paroi du corps tubulaire 12, au voisinage de l'extrémité de celui-ci qui est assemblée à l'élément de structure 19. L'autre extrémité du soufflet est assemblée de façon étanche (soudée) à une autre couronne 30 faisant saillie de la paroi d'une pièce de transfert 32 assujettie à se déplacer dans le boîtier 11, parallèlement à un plan perpendiculaire à l'axe $O_1$ de l'arbre récepteur 20. Cette pièce de transfert 32 a globalement la forme d'un disque dont la partie radialement la plus externe est engagée entre deux surfaces annulaires de guidage 38, 40, parallèles, appartenant respectivement au corps 12 et audit couvercle 13. Cette pièce de transfert est munie de pions 42 par lesquels elle est en contact coulissant avec les deux surfaces annulaires 38, 40.

Selon une caractéristique importante de l'invention, l'arbre de commande 14 et l'arbre récepteur 20 sont parallèles, espacés l'un de l'autre d'une distance d (mesurée entre leurs axes) et situés de part et d'autre de la pièce de transfert 32, chaque arbre comportant une manivelle 14a, 20a respectivement, excentrée d'une même distance prédéterminée x de son propre axe. Les deux manivelles 14a, 20a sont couplées à la pièce de transfert en étant espacées de la même distance d que les arbres eux-mêmes. On définit ainsi une structure d'articulation à parallélogramme déformable, incluant ladite pièce de transfert et propre à permettre une translation circulaire engendrée de cette pièce de transfert et par conséquent, de l'extrémité du soufflet 26 qui lui est rattachée.

L'arbre de commande 14 est monté en rotation dans un logement adapté dudit élément formant couvercle 13, avec interposition d'un roulement à billes 44 et d'un roulement à aiguilles 45 espacés coaxialement. La manivelle 14a associée à cet arbre a la forme d'un tourillon engagé dans un trou 48 ménagé dans la pièce de transfert à l'extérieur du souflet. Un roulement à aiguilles 49 est interposé entre la surface latérale de ce trou et celle du tourillon. Par ailleurs, la manivelle 20a associée à l'arbre récepteur a aussi la forme d'un tourillon engagé dans un trou borgne 50 ménagé dans la pièce de transfert 32 et débouchant au centre de celle-ci, à l'intérieur du soufflet 26. Il apparaît clairement, à ce stade de la description, que toute trace d'un fluide toxique susceptible de s'écouler entre l'arbre 20 et l'alésage 22 ne peut s'échapper de l'espace délimité par le soufflet 26 et la pièce de transfert 32.

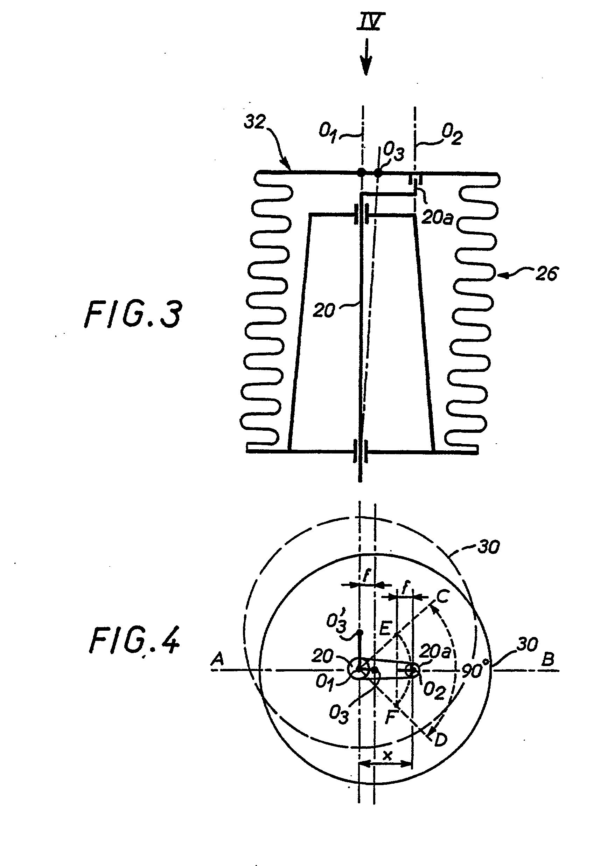

Les figures 3 et 4 explicitent une autre caractéristique importante de l'invention. Sur ces figures, seul l'arbre récepteur 20 et sa manivelle 20a ont été schématisés ainsi que le soufflet 26 et la pièce de transfert 32. De plus, ces figures représentent la manivelle 20a au milieu de la course d'actionnement du dispositif, c'est-à-dire lorsque l'axe $O_2$ du tourillon constituant cette manivelle se trouve dans le plan bissecteur AB de sa propre trajectoire inscrite dans l'angle droit $\overset{\frown}{CO_1D}$, sur la figure 4. Cette trajectoire est représentée par l'arc $\overset{\frown}{EF}$. Selon l'invention, le centre $O_3$ du périmètre de raccordement du soufflet 26 à la pièce de transfert 32 (c'est-à-dire concrètement le centre de la couronne 30) est décalé de l'axe $O_1$ de l'arbre récepteur dans une direction propre à réduire le déport du soufflet pendant le déplacement de la pièce de transfert. Le décalage est tel que le centre $O_3$ se trouve sensiblement dans le plan bissecteur AB et entre les deux axes $O_1$ et $O_2$ parallèles de l'arbre 20 et de sa manivelle 20a lorsque ladite manivelle est au milieu de sa trajectoire. Selon un mode de réalisation actuellement préféré, ce décalage est choisi de façon que la projection du centre $O_3$ à l'axe $O_1$ de l'arbre récepteur, lorsque la manivelle est au milieu de sa trajectoire, soit sensiblement égale à la valeur de la flèche f de l'arc $\overset{\frown}{EF}$. Dans ces conditions, lors de son déplacement en translation circulaire le centre $O_3$ passe en $O'_3$ dans un plan perpendiculaire au plan bissecteur AB lorsque la manivelle arrive à l'extrémité E de sa trajectoire. La position de la couronne 30 en fin de course est représentée en trait interrompu sur la figure 4 et la distance $O_1 O'_3$ représente le déport mentionné ci-dessus. A titre d'exemple, ce déport est alors de 0,707 x alors qu'il serait de 0,765 x si le centre $O_3$ se trouvait sur l'axe $O_1$ de l'arbre 20 tel que représenté sur le certificat d'addition N° 78 358 au brevet français N° 1 248 634.

## Revendications

1- Dispositif de transmission d'un mouvement de rotation, étanche, à soufflet (26) comprenant un arbre de commande (14) et un arbre récepteur (20), du type dans lequel ledit soufflet entoure ledit arbre récepteur et est fixé de façon étanche par ses deux extrémités, d'une part à une partie fixe (28) d'un boîtier et d'autre part à une pièce de transfert (32) assujettie à se déplacer parallèlement à un plan perpendiculaire audit arbre récepteur (20), caractérisé en ce que ledit arbre de commande (14) et ledit arbre récepteur (20) sont parallèles, espacés l'un de l'autre d'une distance d et situés de part et d'autre de la pièce de transfert (32), en ce que chaque arbre comporte une manivelle (14a, 20a) excentrée d'une même distance (x) prédéterminée de son axe et en ce que ces deux manivelles sont couplées à ladite pièce de transfert (32) en étant espacées de la même distance (d) que lesdits arbres, de façon à permettre une translation circulaire engendrée de ladite pièce de transfert.

2- Dispositif de transmission selon la revendication 1, caractérisé en ce que la manivelle (20a) de l'arbre récepteur (20) a la forme d'un tourillon engagé dans un trou borgne (50) ménagé dans ladite pièce de transfert.

3- Dispositif de transmission selon la revendication 1 ou 2, caractérisé en ce que la manivelle (14a) de l'arbre de commande (14) a la forme d'un tourillon engagé dans un trou (48) ménagé dans ladite pièce de transfert.

4- Dispositif de transmission selon la revendication 3, caractérisé en ce qu'un roulement à aiguilles (49) est interposé entre ledit tourillon et la paroi latérale du trou de ladite pièce de transfert dans lequel il est engagé.

5- Dispositif de transmission selon l'une des revendications précédentes, caractérisé en ce que ladite pièce de transfert (32) a globalement la forme d'un disque dont la partie radialement la plus externe est engagée entre deux surfaces annulaires de guidage (38, 40) parallèles, du boîtier précité.

6- Dispositif de transmission selon l'une des revendications précédentes, caractérisé en ce que le centre ($O_3$) du périmètre de raccordement du soufflet (26) à ladite pièce de transfert (32) est décalé de l'axe ($O_1$) dudit arbre récepteur (20) dans un sens propre à réduire le déport dudit soufflet.

7- Dispositif de transmission selon la revendication 6, caractérisé en ce que ce décalage est tel que ledit centre ($O_3$) se trouve sensiblement dans le plan bissecteur (AB) et entre les deux axes parallèles ($O_1$, $O_2$) de l'arbre (20) et de sa manivelle (20a), lorsque ladite manivelle est au milieu de sa trajectoire.

8- Dispositif de transmission selon la revendication 7, caractérisé en ce que le décalage dudit centre ($O_3$) est tel que sa projection à l'axe ($O_1$) de l'arbre récepteur (20), lorsque ladite manivelle est au milieu de sa trajectoire, soit sensiblement égale à la valeur de la flèche (f) de l'arc ($\widehat{EF}$) décrit par l'axe de ladite manivelle dudit arbre récepteur tout au long de sa course.

## Patentansprüche

1. Mit einem Balg (26) abgedichtete Vorrichtung zur Übertragung einer Drehbewegung, mit einer Antriebswelle (14) und einer Abtriebswelle (20), wobei besagter Balg die besagte Abtriebswelle umgibt und mit seinen beiden Enden einerseits an einem feststehenden Gehäuseteil (28) und andererseits an einem Übertragungsteil (32) dicht befestigt ist, welches in einer zur Abtriebswelle senkrechten Ebene parallel verschiebbar ist, dadurch gekennzeichnet, daß die Antriebswelle (14) und die Abtriebswelle (20) parallel und mit gegenseitigem Abstand (d) sowie beiderseits des Übertragungsteils (32) angeordnet sind, daß weiter jede Welle mit gleichem vorgegebenem Abstand (x) von der jeweiligen Wellenachse exzentrische Kurbel (14a, 20a) aufweist, und daß diese zwei Kurbeln mit dem Übertragungsteil (32) gekuppelt sind, wobei sie den gleichen gegenseitigen Abstand (d) wie die Wellen haben, so daß eine Kreisbewegung des Übertragungsteils entstehen kann.

2. Übertragungsvorrichtung nach Anspruch 1, dadurch gekennzeichnet, daß die Kurbel (20a) der Abtriebswelle (20) die Form eines Drehzapfens hat, der in ein in das Übertragungsteil eingearbeitetes Sackloch (50) eingreift.

3. Übertragungsvorrichtung nach Anspruch 1 oder 2, dadurch gekennzeichnet, daß die Kurbel (14a) der Antriebswelle (14) die Form eines Drehzapfens hat, der in ein in das Übertragungsteil eingearbeitetes Loch (48) eingreift.

4. Übertragungselement nach Anspruch 3, dadurch gekennzeichnet, daß zwischen dem Drehzapfen und der Seitenwandung des Loches des Übertragungsteils, in welches der Drehzapfen eingreift, ein Nadellager (49) eingesetzt ist.

5. Übertragungsvorrichtung nach einem der vorstehenden Ansprüche, dadurch gekennzeichnet, daß das Übertragungsteil (32) im Ganzen die Form einer Scheibe hat, dessen weit außen liegender Radialbereich zwischen zwei ringförmigen, parallelen Führungsflächen (38, 40) des vorerwähnten Gehäuses eingreift.

6. Übertragungsvorrichtung nach einem der vorstehenden Ansprüche, dadurch gekennzeichnet, daß die Mitte ($O_3$) des Umfangs der Verbindung des Balges (26) mit dem Übertragungsteil (32) gegenüber der Achse ($O_1$) der Abtriebswelle (20) in eine geeignete Richtung versetzt ist, um den Versatz des Balgs zu verringern.

7. Übertragungsvorrichtung nach Anspruch 6, dadurch gekennzeichnet, daß diese Verschiebung so ausgelegt ist, daß sich der Mittelpunkt ($O_3$) ungefähr auf der halbierenden Ebene (AB) und zwischen den zwei parallelen Achsen ($O_1$, $O_2$) der Welle (20) und seiner Kurbel (20a) befindet, wenn sich die Kurbel auf der Hälfte ihres Weges befindet.

8. Übertragungsvorrichtung nach Anspruch 7, dadurch gekennzeichnet, daß die Verschiebung des Mittelpunktes ($O_3$) so ausgelegt ist, daß dessen Abstand zur Achse ($O_1$) der Abtriebswelle (20) wenn sich die Kurbel auf der Hälfte ihrer Bahn befindet, ungefähr gleich groß ist, wie die Bogenhöhe (f) des Bogens (EF), welcher durch die Achse der Kurbel der Abtriebswelle während des ganzen Weges beschreibt.

## Claims

1. A sealed, rotary transmission device of bellows construction, comprising a control shaft (14) and a receiver shaft (20), of the type in which said bellows (26) surrounds said receiver shaft and is fixed in a sealed manner at both of its ends, at one end to a fixed part (28) of a casing and, at the other end, to a transfer member (32) constrained to move parallel to a plane perpendicular to said receiver shaft (20), characterised in that said control shaft (14) and said receiver shaft (20) are parallel, spaced apart by a distance (d) and disposed on either side of the transfer member (32), in that each shaft comprises a crank (14a, 20a) offset by the same predetermined distance (x) from its axis, and in that these two cranks are coupled to said transfer member (32) and are spaced by the same distance (d) as said shafts so as to allow a circular movement induced by said transfer member.

2. A transmission device according to claim 1, characterised in that the crank (20a) of the receiver shaft (20) is in the form of a journal inserted in a blind hole (50) provided in said transfer member.

3. A transmission device according to claim 1 or 2, characterised in that the crank (14a) of the control shaft (14) is in the form of a journal inserted into a hole (48) provided in said transfer member.

4. A transmission device according to claim 3, characterised in that a needle roller bearing (49) is disposed between said journal and the lateral wall of the hole in said transfer member in which it is inserted.

5. A transmission device according to any one of the preceding claims, characterised in that said transfer member (32) is generally in the shape of a disc whose radially outermost part is engaged between two parallel annular guide surfaces (38, 40) of the aforesaid casing.

6. A transmission device according to any one of the preceding claims, characterised in that the centre $(O_3)$ of the perimeter where the bellows (26) is joined to said transfer member (32) is displaced from the axis $(O_1)$ of said receiver shaft (20) in a direction adapted to reduce the offset of said bellows.

7. A transmission device according to claim 6, characterised in that this displacement is such that said centre $(O_3)$ is situated substantially in the bisecting plane (AB) and between the two parallel axes $(O_1, O_2)$ of the shaft (20) and its crank (20a) when said crank is at the middle of its path.

8. A transmission device according to claim 7, characterised in that said displacement from said centre $(O_3)$ is such that its projection on to the axis $(O_1)$ of the receiver shaft (20), when said crank is at the middle of its path, is substantially equal to the value of the deflection (f) of the arc (EF) described by the axis of said crank of said receiver shaft over the entire travel thereof.

FIG.1

FIG.2

FIG.3

FIG.4